# EUROPEAN PATENT SPECIFICATION

(11) **EP 4 068 587 B1**
(45) Date of publication and mention of the grant of the patent: **12.11.2025**
(21) Application number: 19954450.3
(22) Date of filing: 26.11.2019
(51) Int. Cl.: H02K 7/08, H02K 7/00, H02K 7/14

(54) **ROTARY ELECTRIC MACHINE**
ELEKTRISCHE DREHMASCHINE
MACHINE ÉLECTRIQUE ROTATIVE

(43) Date of publication of application: 05.10.2022
(73) Proprietor: NISSAN MOTOR Co., Ltd., Yokohama-shi, Kanagawa 221-0023 (JP); Renault s.a.s, 92100 Boulogne Billancourt (FR)
(72) Inventor: KUWAHARA, Takashi, Atsugi-shi, Kanagawa 243-0123 (JP); DELEGUE, Jacques, 92100 Boulogne-Billancourt (FR)
(74) Representative: Hoefer & Partner Patentanwälte mbB
(86) International application number: PCT/IB2019/001337
(87) International publication number: WO 2021/105735

(56) References cited:
- WO-A1-2019/197856
- DE-A1- 4 139 984
- JP-A- 2000 356 256
- JP-A- 2002 136 007
- JP-A- 2002 233 112
- JP-A- 2003 237 599
- JP-A- 2007 247 711
- JP-A- 2007 247 711
- JP-A- 2010 112 490
- JP-A- 2010 154 751
- JP-A- 2017 093 076

## Description

### TECHNICAL FIELD

The present invention relates to a rotating electric machine.

### BACKGROUND ART

JP2014-225971A discloses an electric motor including a rotor having a rotor shaft, a stator surrounding the rotor, and a motor housing accommodating the rotor and the stator. One end of the rotor shaft of the electric motor is coupled to a rotation shaft of a transmission. The transmission reduces a speed of rotation power of the rotor shaft and transmits the rotation power to a drive shaft.
WO 2019/197 856 A1 discloses a rotating electric machine which is provided with a rotor and a stator in a housing, and a rotor shaft of the rotor is connected to a power transmission shaft of a power transmission device. A bearing is provided in the housing, and one end of the rotor shaft is supported via the bearing. The other end of the rotor shaft is supported by the power transmission shaft by means of a spigot-joint structure which fits together with the power transmission shaft.
JP 2007 - 247 711 A discloses a plurality of rolling bearings which are used for an underwater rotary device having a housing housing a rotational shaft to which an impeller for circulating water is attached, so as to rotatably support the rotational shaft. Each rolling bearing comprises: bearing rings (inner and outer rings) rotatable relatively to each other and opposed to each other disposed between the rotational shaft and the housing; and a plurality of rolling elements incorporated between the bearing rings to be capable of rolling. In at least one of rolling bearings out of these bearings, one bearing ring is fixed to the housing by interference fit, the other bearing ring is fixed to the rotational shaft by clearance fit, and elastic material is disposed in a gap between the inner ring (inner ring inner diameter face) and the rotational shaft (rotational shaft outer diameter face).
DE 41 39 984 A1 discloses a DC motor which has a drive shaft having a bearing pin at at least one end fitting into a bearing with relative play between them and supported within the bearing by a resilient element, e.g. an O-ring.
JP 2010 - 112 490 A discloses a rolling bearing with two circumferential grooves which are provided in both ends of an inner diameter face of an inner ring which is fitted to a shaft of a deep groove ball bearing. An O-ring is mounted in each circumferential groove. A conductive lubricating coat which comprises lubricating oil or lubricating grease containing conductive agent is formed on the inner diameter face of the inner ring between the circumferential grooves in which the O-rings are mounted. The O-rings hold the conductive lubricating coat in a liquid sealing manner.

### SUMMARY OF INVENTION

In the above electric motor of JP 2014 - 225 971 A, a ball bearing supporting the one end of the rotor shaft and a ball bearing supporting the other end of the rotor shaft are provided in the motor housing. That is, the electric motor has a configuration in which the rotor shaft is rotatably borne by the ball bearing on one end side and the ball bearing on the other end side, and the two ball bearings are disposed apart from each other in an axial direction of the shaft. In the electric motor (rotating electric machine) having such a configuration, since the ball bearings are disposed on the one end side and the other end side of the rotor shaft, there is a problem that not only the overall configuration of the electric motor is complicated, but also friction loss due to the ball bearings on the one end side and the other end side occurs at the time of driving the motor.

To solve such a problem, a configuration is also conceivable in which only the one end side of the rotor shaft is supported by a ball bearing and the other end side is connected to a rotation shaft of a transmission by a spline or the like. With such a configuration, although the friction loss can be reduced, vibration generated between the rotor shaft and the rotation shaft is transmitted to the bearing, which causes a problem in ensuring durability of the bearing.

An object of the present invention is to provide a rotating electric machine capable of ensuring durability of a bearing while reducing friction loss with a simple configuration.

This object is solved by the features of the independent claim. The dependent claims contain advantageous embodiments of the present invention.

### BRIEF DESCRIPTION OF DRAWINGS

FIG. 1 is a vertical cross-sectional view of a part of a motor system according to a first embodiment.
FIG. 2 is an enlarged view around a bearing.
FIG. 3 is a vertical cross-sectional of a part of a motor system according to a second embodiment.
FIG. 4 is a vertical cross-sectional of a part of a motor system according to a third embodiment.
FIG. 5 is a vertical cross-sectional of a part of a motor system according to a fourth embodiment.

### DESCRIPTION OF EMBODIMENTS

Hereinafter, embodiments of the present disclosure are described with reference to the drawings.

### <First Embodiment>

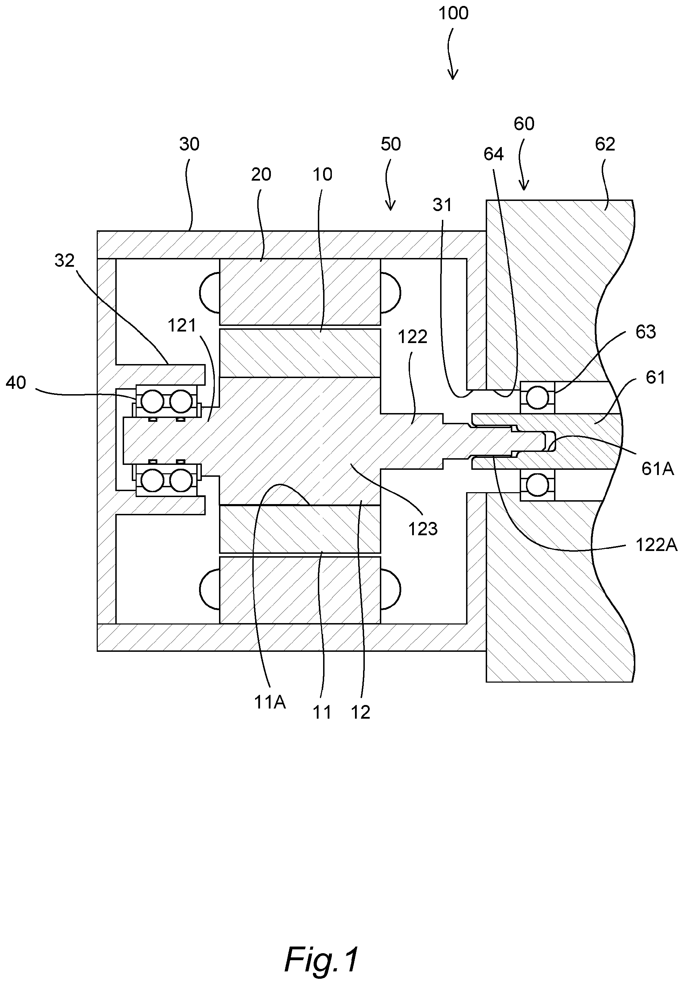

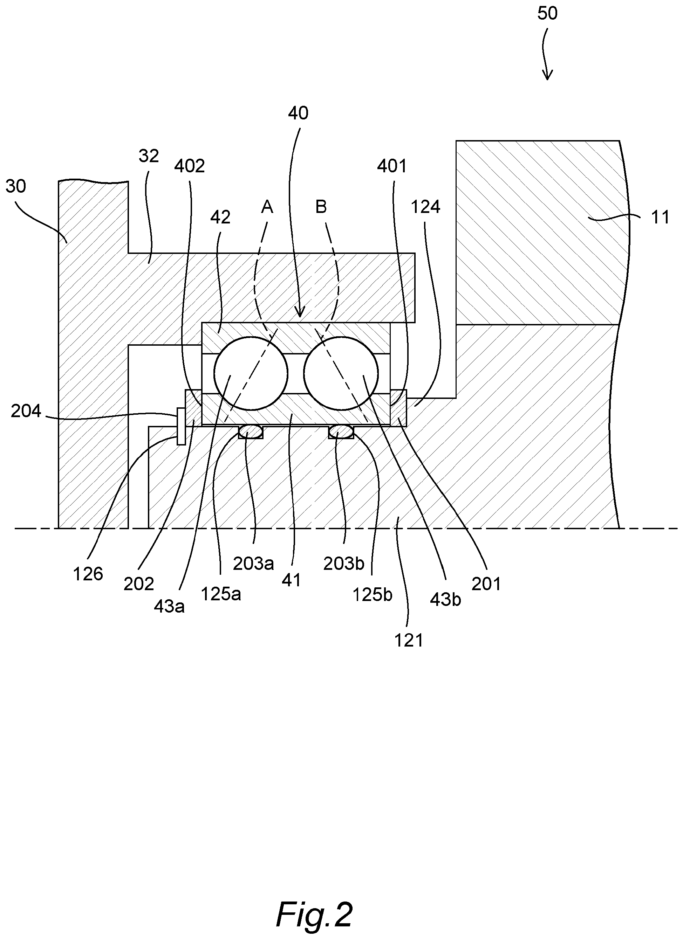

FIG. 1 is a cross-sectional view of a part of a motor system 100 according to the first embodiment of the present disclosure. FIG. 2 is an enlarged view around a bearing 40.

As shown in FIG. 1, the motor system 100 (rotating electric machine system) includes a motor 50 and a transmission 60 and is, for example, a drive device for an electric vehicle. Although the motor system 100 of this embodiment is described as a drive device for an electric vehicle, the motor system 100 may be used as a drive device for an apparatus other than vehicles, for example, various electric equipment or industrial machines.

The motor 50 rotates by receiving power from a power supply such as a battery (not shown) and functions as an electric motor that drives wheels of a vehicle. The motor 50 also functions as a generator that is driven by rotation of the wheels to generate (regenerate) electricity. Therefore, the motor 50 is a so-called motor generator (rotating electric machine) functioning as an electric motor and a generator.

The motor 50 includes a rotor 10, a stator 20 surrounding the rotor 10, and a housing 30 accommodating the rotor 10 and the stator 20.

The rotor 10 includes a cylindrical rotor core 11 formed by stacking plural electromagnetic steel sheets and including a permanent magnet therein, and a rotor shaft 12 fixed in an insertion hole 11A of the rotor core 11. The rotor 10 is rotatably disposed inside the stator 20. The rotor shaft 12 is a shaft member projecting from both end surfaces of the rotor core 11 to the outside in the axial direction. One end portion 121 (left end) of the rotor shaft 12 is rotatably supported by a bearing 40 fixed to the housing 30 and the other end portion 122 (right end) of the rotor shaft 12 is coupled to a rotation shaft 61 of the transmission 60. Rotation centers of the rotor shaft 12 and the rotation shaft 61 are located on the same line.

The stator 20 is a cylindrical member formed by stacking plural electromagnetic steel sheets and is wound by U-phase, V-phase, and W-phase coils. An outer peripheral surface of the stator 20 is fixed to an inner peripheral surface of the housing 30.

The housing 30 is a case member accommodating the rotor 10 and the stator 20 and is formed by casting a metal member, for example. The motor 50 and the transmission 60 are adjacent to each other. A right side surface of the housing 30 is fixed to a left side surface of a transmission case 62 of the transmission 60 by a fastening unit such as a bolt.

In the right side surface of the housing 30, a through hole 31 is formed and allows the other end portion 122 of the rotor shaft 12 to pass through to the outside of the housing 30.

The transmission 60 includes the rotation shaft 61 and plural gears (not shown) in the transmission case 62, and is a power transmission device that changes a speed of rotation power of the rotor shaft 12 and transmits the rotation power to the wheels. The rotation shaft 61 is rotatably supported by a ball bearing 63 provided in the transmission case 62.

In the left side surface of the transmission case 62, a through hole 64 is formed and allows a left end portion (tip portion) of the rotation shaft 61 to pass through to the outside of the transmission case 62. The through hole 64 of the transmission case 62 communicates with the through hole 31 of the housing 30.

Next, a support structure of the rotor shaft 12 of the motor 50 will be described.

As shown in FIG. 1, the rotor shaft 12 of the motor 50 includes a center portion 123 fixed in the insertion hole 11A of the rotor core 11, the one end portion 121 extending from the center portion 123 to a side opposite to the transmission 60, and the other end portion 122 extending from the center portion 123 to the transmission 60. Outer diameters of the one end portion 121 and the other end portion 122 are smaller than an outer diameter of the center portion 123, and the one end portion 121 and the other end portion 122 are shaft members thinner than the center portion 123.

The other end portion 122 of the rotor shaft 12 is a shaft member whose diameter decreases stepwise toward a tip. The rotation shaft 61 of the transmission 60 has a shaft hole 61A formed in a left end portion and recessed in the axial direction. The tip portion of the other end portion 122 of the rotor shaft 12 is inserted into the shaft hole 61A (spigot hole) formed in the end portion of the rotation shaft 61, and an outer peripheral surface of the other end portion 122 is fitted to an inner peripheral surface of the shaft hole 61A. In this way, the other end portion 122 of the rotor shaft 12 is connected to the rotation shaft 61 by a spigot joint structure that is fitted to the rotation shaft 61 of the transmission 60.

Although the shaft hole 61A of the rotation shaft 61 is linearly formed in a portion constituting the left end portion of the rotation shaft 61, the shaft hole 61A may be linearly formed from the left tip surface to the center portion 123 of the rotation shaft 61 or to a position closer to a right end portion than the center portion 123. Therefore, the other end portion 122 of the rotor shaft 12 may be spigot-connected to the shaft hole 61A of the rotation shaft 61 at the center portion 123 of the rotation shaft 61 or at a position closer to a right end than the center portion 123.

The other end portion 122 of the rotor shaft 12 includes a spline portion 122A that is spline-coupled to the inner peripheral surface of the shaft hole 61A on an outer peripheral surface at a position closer to the center portion 123 than the tip, that is, at a position different from a portion (spigot connection portion) fitted to the rotation shaft 61. Relative rotation between the rotor shaft 12 and the rotation shaft 61 is restricted by spline-coupling the rotor shaft 12 and the rotation shaft 61 via the spline portion 122A.

In the rotor shaft 12, the spline portion 122A may be provided at a position close to the tip of the other end portion 122, and the portion (spigot connection portion) fitted to the rotation shaft 61 may be provided at a position closer to the center portion 123 than the spline portion 122A.

Further, in this embodiment, a regulation of the relative rotation between the rotor shaft 12 and the rotation shaft 61 is implemented by a spline coupling structure and may also be implemented by coupling structures other than the spline coupling structure. Examples of the coupling structures other than the spline coupling structure include a flange coupling structure, an Oldham coupling structure, and a Latex coupling structure.

On an inner side of a left side surface of the housing 30, a cylindrical bearing support portion 32 that supports the bearing 40 is formed in a projecting manner. The one end portion 121 of the rotor shaft 12 is rotatably supported by the bearing 40 fixed to an inner peripheral surface of the bearing support portion 32. In this way, when viewed in the motor 50 alone, the rotor shaft 12 of the rotor 10 is in a state where only the one end portion 121 is supported by the bearing 40. The bearing 40 is a double row angular contact ball bearing.

Since the bearing 40 supporting the one end portion 121 of the rotor shaft 12 is a double row angular contact ball bearing, even when an axial force is applied to the rotor shaft 12, the rotor shaft 12 can rotate while receiving the force by the double row angular contact ball bearing. Thus, the rotor shaft 12 can be supported more stably.

Before the motor 50 and the transmission 60 are assembled, the rotor shaft 12 is supported in a cantilever manner with respect to the housing 30 via the bearing 40. When the one end portion 121 of the rotor shaft 12 is not firmly supported by the bearing 40, the other end portion 122 of the rotor shaft 12 may swing, and the rotor core 11 attached to the rotor shaft 12 may interfere with the stator 20.

However, in the motor 50 of this embodiment, since the bearing 40 is a double row angular contact ball bearing, the one end portion 121 can be firmly supported without the other end portion 122 of the rotor shaft 12 swinging. Therefore, in a state before the rotor shaft 12 is coupled to the rotation shaft 61 of the transmission 60, it is possible to prevent interference between the rotor core 11 and the stator 20.

Next, details of the bearing 40 will be described with reference to FIG. 2.

The bearing 40 has a configuration in which two rows of rolling elements 43a and 43b are provided between an inner race 41 and an outer race 42 in the axial direction of the shaft, and in each row, a straight line (lines A and B) connecting contact points of the inner race 41, the rolling elements 43a and 43b, and the outer race 42 has an inclination with respect to a shaft radial direction. The line A in the outer row inclines toward the other end portion 122 from the inner race 41 toward the outer race 42, and the line B in the inner row inclines toward the one end portion 121 from the inner race 41 toward the outer race 42.

The inner race 41 of the bearing 40 is fixed to an outer peripheral surface of the one end portion 121 of the rotor shaft 12. The outer race 42 of the bearing 40 is fixed to the inner peripheral surface of the bearing support portion 32.

The diameter of the one end portion 121 of the rotor shaft 12 changes to decrease stepwise, and this stepped portion is referred to as a "step portion 124". A position of the bearing 40 in the axial direction is fixed by the step portion 124.

More specifically, a first wall-shaped member 201 is installed between a right end portion (hereinafter, referred to as a "first end portion 401") of the bearing 40 and the step portion 124. The first wall-shaped member 201 has an annular shape and is fixed by being fitted to the rotor shaft 12 and abutting against the step portion 124. The first wall-shaped member 201 has a wave spring shape, and is a spring member that exerts a biasing force by being compressed in a plate thickness direction.

A second wall-shaped member 202 is installed on a side opposite to the first end portion 401 of the bearing 40, that is, on a left end portion (hereinafter, referred to as a "second end portion 402"). The second wall-shaped member 202 has an annular shape, and is fixed to be not movable in the axial direction by being fitted to the rotor shaft 12 and further fitting a snap ring 204 into a groove 126 formed in the rotor shaft 12. The second wall-shaped member 202 may be fixed to the one end portion 121 of the rotor shaft 12 not by the snap ring 204 but by friction fit by press-fitting or the like, or may be fixed by screwing or the like.

Since the first wall-shaped member 201 is a spring member and the second wall-shaped member 202 is not movable, the inner race 41 of the bearing 40 is biased in the axial direction by the first wall-shaped member 201 that is a spring member, and is pressed toward the second wall-shaped member 202. As a result, the bearing 40 is sandwiched between the first wall-shaped member 201 and the second wall-shaped member 202, and the position of the bearing 40 is firmly fixed.

Two O-rings 203a and 203b are interposed between the inner race 41 of the bearing 40 and the one end portion 121 of the rotor shaft 12.

More specifically, two grooves 125a and 125b are circumferentially formed in parallel in the axial direction on an outer periphery of the one end portion 121. The O-rings 203a and 203b are fitted in parallel in the grooves 125a and 125b, respectively. Each of the O-rings 203a and 203b is formed of an elastic member such as rubber and has an annular shape and a substantially circular cross section. A diameter of the cross section is larger than a depth of each of the grooves 125a and 125b.

That is, in a state where the O-rings 203a and 203b are fitted in the grooves 125a and 125b, portions where the O-rings 203a and 203b are fitted have a diameter larger than the diameter of the outer periphery of the one end portion 121. An inner diameter of the inner race 41 of the bearing 40 is slightly larger than the diameter of the outer periphery of the one end portion 121. When the bearing 40 is attached to the one end portion 121 of the rotor shaft 12, the inner race 41 of the bearing 40 crushes the O-rings 203a and 203b, and an inner periphery of the inner race 41 of the bearing 40 is supported by an elastic force of the O-rings 203a and 203b provided in parallel in the axial direction at a position slightly separated from the outer periphery of the one end portion 121.

Furthermore, grease, which is a viscous fluid, is filled between the inner race 41 of the bearing 40 and the one end portion 121. That is, the grease is filled in a space formed between the first wall-shaped member 201 and the second wall-shaped member 202, which is a gap between the inner periphery of the inner race 41 of the bearing 40 and the outer periphery of the one end portion 121.

In this way, the configuration in which the bearing 40 is attached to the rotor shaft 12 via the O-rings 203a and 203b cushions a vibration of the rotor shaft 12 from being transmitted to the bearing 40. Furthermore, since the grease is filled between the bearing 40 and the rotor shaft 12, the inner periphery of the inner race 41 of the bearing 40 and the outer periphery of the one end portion 121 of the rotor shaft 12 are prevented from coming into contact with each other and thus the wear is prevented.

The bearing 40 is supported by the two O-rings 203a and 203b, and is not limited thereto. For example, a flat belt-shaped elastic member may be interposed between the bearing 40 and the one end portion 121 without providing a groove in the one end portion 121. The O-rings 203a and 203b may be made of an elastic member such as silicon or elastomer instead of rubber.

In addition, the first wall-shaped member 201 may be configured with another spring such as a disc spring instead of the wave spring. Further, the first wall-shaped member 201 may be formed of an elastic material such as rubber. Instead of the first wall-shaped member 201, the second wall-shaped member 202 may be configured with a spring member, and both the first wall-shaped member 201 and the second wall-shaped member 202 may be spring members. In this embodiment, in consideration of prevention of grease scattering, it is preferable that only the first wall-shaped member 201 in contact with the step portion 124 is a spring member.

Next, a method for attaching the bearing 40 to the rotor shaft 12 of the first embodiment will be described.

First, the O-rings 203a and 203b are fitted in the grooves 125a and 125b of the one end portion 121 of the rotor shaft 12, respectively.

Next, the first wall-shaped member 201 is axially passed through an open end of the one end portion 121 of the rotor shaft 12. The first wall-shaped member 201 is moved until the first wall-shaped member 201 abuts against the step portion 124.

Next, the grease is applied around the O-rings 203a and 203b of the one end portion 121 of the rotor shaft 12.

Next, the bearing 40 is axially passed through the rotor shaft 12 from the open end of the one end portion 121 of the rotor shaft 12. The bearing 40 is moved to a position where the bearing 40 abuts against the first wall-shaped member 201.

Next, the second wall-shaped member 202 is axially passed through the rotor shaft 12 from the open end of the one end portion 121 of the rotor shaft 12, and is moved to a position where the second wall-shaped member 202 abuts against the second end portion 402 of the bearing 40. In this state, the snap ring 204 is fitted in the groove 126.

In this way, the bearing 40 is attached to the one end portion 121 of the rotor shaft 12. Thereafter, when the rotor shaft 12 is attached to the housing 30, the outer race 42 of the bearing 40 is fixed to the bearing support portion 32 of the housing 30 by press-fitting. Thus, the bearing 40 is fixed to the housing 30, and the rotor shaft 12 is supported.

According to the motor 50 (rotating electric machine) of the first embodiment of the present disclosure described above, the following operational effects can be obtained.

The motor 50 according to this embodiment includes the rotor 10 and the stator 20 in the housing 30. The rotor shaft 12 of the rotor 10 is connected to the rotation shaft 61 (power transmission shaft) of the transmission 60 (power transmission device). The bearing 40 is provided in the housing 30. The one end portion 121 of the rotor shaft 12 is supported by the bearing 40, and the other end portion 122 of the rotor shaft 12 is supported by the rotation shaft 61 by the spigot joint structure fitted to the rotation shaft 61. Further, the O-rings 203a and 203b (elastic members) are provided between the bearing 40 and the rotor shaft 12.

In this embodiment, since the other end portion 122 of the rotor shaft 12 is spigot-connected to the rotation shaft 61 of the transmission 60, it is not necessary to provide a bearing for supporting the other end portion 122 of the rotor shaft 12 in the housing 30. In the motor 50, since both ends of the rotor shaft 12 can be rotatably supported by the bearing 40 for the one end portion 121 provided in the housing 30 and the rotation shaft 61 of the transmission 60, it is possible to omit a bearing for the other end portion 122 of the rotor shaft 12. As a result, the overall configuration of the motor 50 can be simplified. In addition, since no bearing is disposed at the other end portion 122, it is possible to reduce the frictional resistance during rotation of the rotor shaft 12, and to reduce the manufacturing cost of the motor 50.

Furthermore, since the O-rings 203a and 203b (elastic members) are provided between the bearing 40 and the rotor shaft 12, the vibration of the rotor shaft 12, which is transmitted to the bearing 40, due to the spigot joint structure of the other end portion 122 is cushioned, the bearing 40 and the rotor shaft 12 can be prevented from being worn or damaged, and the durability of the bearing 40 can be ensured.

In the motor 50 according to this embodiment, since the elastic members are the O-rings 203a and 203b fixed to the rotor shaft 12, it is possible to prevent wear or damage of the bearing 40 and the rotor shaft 12 by a simple and inexpensive configuration.

In the motor 50 according to this embodiment, since the two O-rings 203a and 203b are provided in parallel in the axial direction between the bearing 40 and the rotor shaft 12, it is possible to more reliably prevent the wear or damage of the bearing 40 and the rotor shaft 12.

In the motor 50 according to this embodiment, since the gap formed between the bearing 40 and the rotor shaft 12 by the O-rings 203a and 203b is filled with the grease that is a viscous fluid, the inner periphery of the inner race 41 of the bearing 40 and the outer periphery of the one end portion 121 of the rotor shaft 12 are prevented from coming into contact with each other, and the wear is further prevented.

In the motor 50 according to this embodiment, since the bearing 40 is a double row angular contact ball bearing, even when the axial force is applied to the rotor shaft 12, the rotor shaft 12 can receive the force by the double row angular contact ball bearing. Thus, the rotor shaft 12 can be supported more stably.

In the motor 50 according to this embodiment, since the rotor shaft 12 is provided with the wall-shaped members (the first wall-shaped member 201 and the second wall-shaped member 202) that restrict movement of the bearing 40 in the axial direction at both ends of the bearing 40, the position of the bearing 40 on the rotor shaft 12 is fixed between the first wall-shaped member 201 and the second wall-shaped member 202.

In the motor 50 according to this embodiment, since at least one (the first wall-shaped member 201) of the wall-shaped members (the first wall-shaped member 201 and the second wall-shaped member 202) is a spring member that biases the bearing 40 in the axial direction, the bearing 40 is biased by the first wall-shaped member 201 that is a spring member and is pressed toward the second wall-shaped member 202. As a result, the position of the bearing 40 on the rotor shaft 12 is firmly fixed between the first wall-shaped member 201 and the second wall-shaped member 202. Furthermore, the grease filled between the bearing 40 and the rotor shaft 12 is prevented from scattering to the outside by sandwiching the bearing 40 between the first wall-shaped member 201 and the second wall-shaped member 202.

### <Second Embodiment>

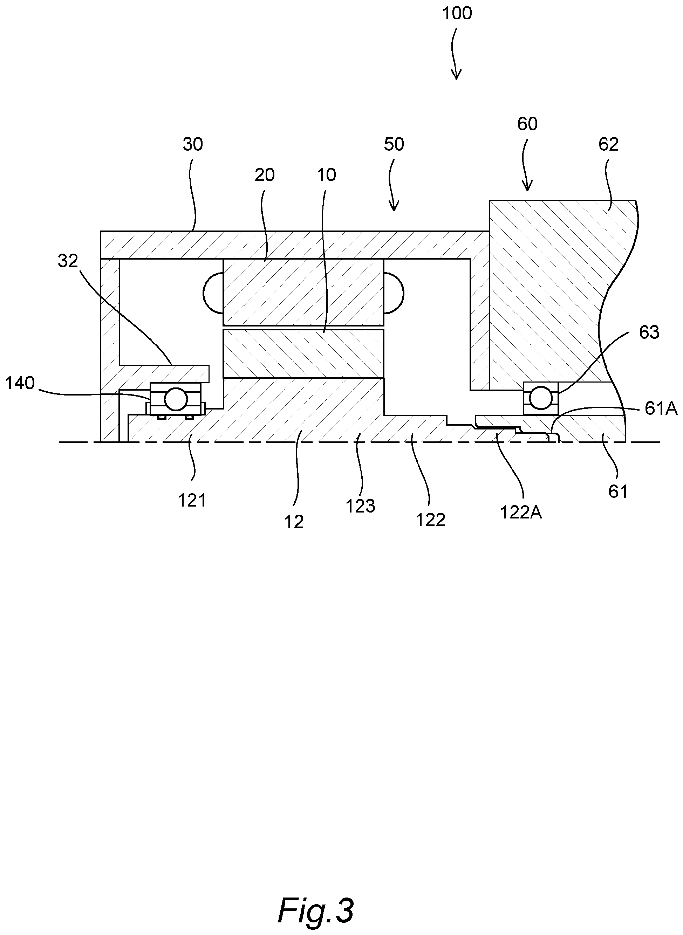

Next, the motor system 100 provided with the motor 50 and the transmission 60 according to a second embodiment of the present embodiment will be described with reference to FIG. 3. The motor 50 of the second embodiment is different from the motor 50 of the first embodiment in a configuration of a bearing.

As shown in FIG. 3, the motor 50 according to this embodiment includes a bearing 140 configured with a single row ball bearing (deep groove ball bearing) instead of the bearing 40 configured with a double row angular contact ball bearing. Other configurations are the same as those of the first embodiment described above, and thus the description thereof will be omitted.

The double row angular contact ball bearing can rotate while receiving loads in both an axial direction (thrust direction) and a radial direction, whereas the single row ball bearing has a simple configuration and is inexpensive, and is characterized by receiving a load mainly in the radial direction.

Therefore, in the motor system 100, the bearing 140 that is a single row ball bearing can be adopted in consideration of the load between the motor 50 and the transmission 60, the configuration of a spigot joint, and the like. Thus, the manufacturing cost and maintenance cost of the motor system 100 can be reduced.

### <Third Embodiment>

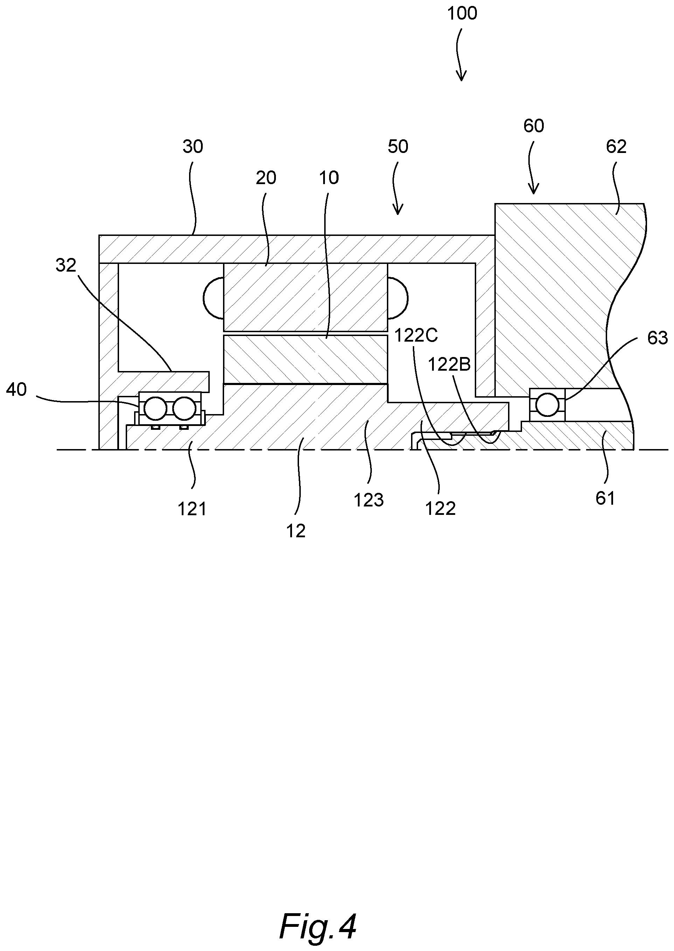

Next, the motor system 100 provided with the motor 50 and the transmission 60 according to a third embodiment of the present embodiment will be described with reference to FIG. 4. The motor 50 of the third embodiment is different from the motor 50 of the first embodiment in a way of spigot connection between the other end portion 122 of the rotor shaft 12 and the rotation shaft 61 of the transmission 60.

As shown in FIG. 4, in the motor 50 according to this embodiment, a shaft hole 122B (spigot hole) recessed in the axial direction is formed in a tip portion of the other end portion 122 of the rotor shaft 12. A left end portion of the rotation shaft 61 of the transmission 60 is a shaft member whose diameter decreases stepwise toward a tip. The left end portion (tip portion) of the rotation shaft 61 of the transmission 60 is inserted into the shaft hole 122B, and an inner peripheral surface of the shaft hole 122B located close to a tip surface of the other end portion 122 is fitted to an outer peripheral surface of an end portion of the rotation shaft 61. Other configurations are the same as those of the first embodiment described above, and thus the description thereof will be omitted.

The shaft hole 122B formed in the other end portion 122 of the rotor shaft 12 includes a spline portion 122C that is spline-coupled to the outer peripheral surface of the rotation shaft 61 on an inner peripheral surface at a position closer to the center portion 123 than the tip, that is, at a position different from a portion (spigot connection portion) fitted to the rotation shaft 61. Relative rotation between the rotor shaft 12 and the rotation shaft 61 is restricted by spline-coupling the rotor shaft 12 and the rotation shaft 61 with the spline portion 122C. In the rotor shaft 12, the spline portion 122C may be provided at a position close to the tip of the other end portion 122, and the portion (spigot connection portion) fitted to the rotation shaft 61 may be provided at a position closer to the center portion 123 than to the spline portion 122C.

In this way, the other end portion 122 of the rotor shaft 12 is connected to the rotation shaft 61 by a spigot joint structure fitted to the rotation shaft 61 of the transmission 60.

Although the shaft hole 122B of the rotor shaft 12 is linearly formed in a portion constituting the other end portion 122, the shaft hole 122B may be linearly formed from a right tip surface to the center portion 123 of the rotor shaft 12 or to a position closer to the one end portion 121 than the center portion 123. Therefore, the rotor shaft 12 may be spigot-connected to the rotation shaft 61 of the transmission 60 at the center portion 123 or at the position closer to the one end portion 121 than the center portion 123.

Further, a regulation of the relative rotation between the rotor shaft 12 and the rotation shaft 61 may be implemented by coupling structures other than the spline coupling structure. Examples of the coupling structures other than the spline coupling structure include a flange coupling structure, an Oldham coupling structure, and a Rotex coupling structure.

In the motor 50 according to this embodiment configured in this way, since the other end portion 122 of the rotor shaft 12 is spigot-connected to the rotation shaft 61 of the transmission 60, it is not necessary to provide a bearing for supporting the other end portion 122 of the rotor shaft 12 in the housing 30, and it is possible to obtain the same operational effects as those of the first embodiment.

In the motor 50 according to the first embodiment, since the other end portion 122 of the rotor shaft 12 is inserted into the shaft hole 61A of the rotation shaft 61, a shaft thickness of the rotor shaft 12 cannot be made larger than a shaft thickness of the rotation shaft 61. However, since the motor 50 of this embodiment has a configuration in which the shaft hole 122B of the other end portion 122 of the rotor shaft 12 is externally fitted to the end portion of the rotation shaft 61, the other end portion 122 can have any thickness regardless of the shaft thickness of the rotation shaft 61. As a result, connection strength between the other end portion 122 of the rotor shaft 12 and the rotation shaft 61 of the transmission 60 can be increased, as necessary.

In particular, since the center portion 123 of the rotor shaft 12 is thick, the other end portion 122 can be easily have any thickness within a range in which an outer diameter of the other end portion 122 is not larger than an outer diameter of the center portion 123. For example, if the other end portion 122 and the center portion 123 of the rotor shaft 12 have the same outer diameter, only the one end portion 121 needs to have a smaller diameter than other portions, and the manufacturing cost of the rotor shaft 12 can be reduced. On the other hand, in a case where only the end portion of the rotation shaft 61 having a substantially constant outer diameter is thick as in the first embodiment in order to increase the connection strength, the manufacturing cost increases. Therefore, according to the rotor shaft 12 of this embodiment, it is possible to increase the connection strength between the rotor shaft 12 and the rotation shaft 61 without increasing the manufacturing cost.

In the motor 50 according to this embodiment, the shaft hole 122B of the other end portion 122 of the rotor shaft 12 includes the spline portion 122C that is spline-coupled to the outer peripheral surface of the rotation shaft 61 on the inner peripheral surface at the position different from the portion fitted to the rotation shaft 61. In this way, the other end portion 122 of the rotor shaft 12 is formed with a portion that is spigot-connected to the rotation shaft 61 and a portion that is spline-coupled to the rotation shaft 61. Therefore, a connection range of the rotor shaft 12 to the rotation shaft 61 is widened, and the other end portion 122 of the rotor shaft 12 can be supported more stably.

Furthermore, in the other end portion 122 of the rotor shaft 12, a portion to be fitted to the rotation shaft 61 is provided at a position closer to the rotation shaft 61 than the spline portion 122C, for example, in the shaft hole 122B in the tip portion of the other end portion 122. As a result, in the rotor shaft 12, a portion supported by the bearing 40 and a portion supported by the rotation shaft 61 can be disposed as far as possible. With such a configuration, both ends of the rotor shaft 12 can be supported in a state where an inclination of the rotor shaft 12 is further reduced, and the rotor shaft 12 can be stably supported.

### <Fourth Embodiment>

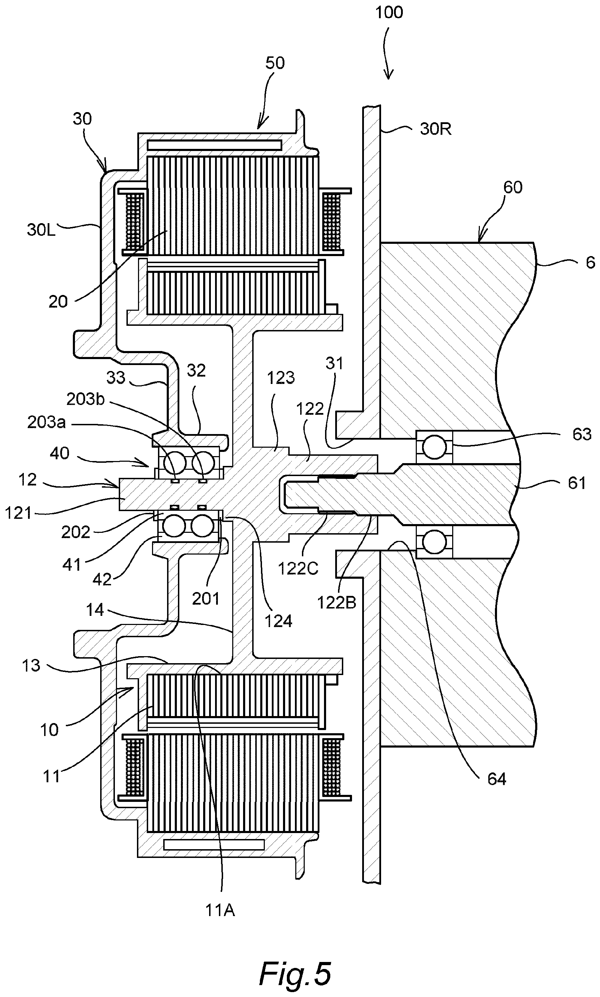

Next, the motor system 100 provided with the motor 50 and the transmission 60 according to a fourth embodiment of the present disclosure will be described with reference to FIG. 5. The fourth embodiment is different from the first embodiment in a structure supporting the rotor core 11.

As shown in FIG. 5, the rotor 10 of the motor 50 according to this embodiment includes the rotor core 11, the rotor shaft 12, a core support portion 13, and a connection portion 14. Other configurations are the same as those of the first embodiment described above, and thus the description thereof will be omitted.

The core support portion 13 of the rotor 10 has a cylindrical shape and is a member that supports the cylindrical rotor core 11 from the inside. The core support portion 13 is formed such that an axial length thereof is slightly larger than an axial length of the rotor core 11. The core support portion 13 is inserted into the insertion hole 11A of the rotor core 11, and the rotor core 11 is fixed onto the core support portion 13 in a state of being externally fitted to an outer periphery of the core support portion 13.

The rotor shaft 12 is disposed inside the core support portion 13. The rotor shaft 12 and the core support portion 13 are connected to each other by the connection portion 14. The connection portion 14 is a plate-shaped wall portion projecting from an outer peripheral surface of the center portion 123 of the rotor shaft 12 in a radial direction of the rotor shaft, and couples the outer peripheral surface of the center portion 123 of the rotor shaft 12 to an inner peripheral surface of the core support portion 13. A plate thickness of the connection portion 14 is thinner than axial lengths of the rotor shaft 12 and the core support portion 13.

In the rotor shaft 12, the one end portion 121 is supported by the bearing 40, and the other end portion 122 is spigot-connected to the rotation shaft 61 of the transmission 60 in a state where the other end portion 122 circumscribes an end portion of the rotation shaft 61.

In the example shown in FIG. 5, similarly to the second embodiment shown in FIG. 3, the other end portion 122 of the rotor shaft 12 is a spigot joint structure in which a tip portion of the rotation shaft 61 is inserted into the shaft hole 122B of the other end portion 122 of the rotor shaft 12, and may also be a spigot joint structure in which the tip portion of the other end portion 122 of the rotor shaft 12 is inserted into the shaft hole 61A of the rotation shaft 61, as in the first embodiment shown in FIG. 1.

In the motor 50 of this embodiment, the housing 30 is formed by a left housing 30L and a right housing 30R, and a center portion 33 of the left housing 30L is recessed in the axial direction of the shaft to enter the inside of the core support portion 13. The bearing support portion 32 is formed on the center portion 33 of the left housing 30L, and the bearing 40 is fixed to the bearing support portion 32. That is, the bearing 40 is provided and fixed to the center portion 33 of the left housing 30L to be located inside the rotor core 11 and the core support portion 13. The bearing 40 is a double row angular contact ball bearing.

The one end portion 121 of the rotor shaft 12 and the bearing 40 are fixed in the same manner as that of the first embodiment described above. That is, on the first end portion 401 side of the bearing 40, the first wall-shaped member 201 that is a spring member is fixed to the step portion 124 formed in a vicinity of a boundary between the connection portion 14 connecting the rotor shaft 12 and the core support portion 13 and the one end portion 121, and the second end portion 402 of the bearing 40 is fixed by the second wall-shaped member. The O-rings 203a and 203b are interposed between an inner peripheral side of the inner race 41 of the bearing 40 and an outer peripheral side of the one end portion 121 of the rotor shaft 12, and grease is filled therein.

Instead of pressing and fixing the first wall-shaped member 201 to the step portion 124 formed in the vicinity of the boundary between the connection portion 14 and the one end portion 121, the connection portion 14 extends in a vertical direction from the one end portion 121, and the first wall-shaped member 201 is pressed to the connection portion 14.

According to the motor 50 of this embodiment configured in this way, the rotor 10 includes the core support portion 13 that supports the rotor core 11 from the inside, and the connection portion 14 that is a plate-shaped member projecting in a radial direction of the rotor shaft from the outer peripheral surface of the rotor shaft 12 and couples the outer peripheral surface of the rotor shaft 12 to the inner peripheral surface of the core support portion 13. Furthermore, the left housing 30L constituting the housing 30 is formed such that the center portion 33 (portion) enters the inside of the core support portion 13. The first wall-shaped member 201 that is a spring member that biases the bearing 40 in the axial direction is provided between the connection portion 14 and the first end portion 401 (one end side) of the bearing 40, and the second wall-shaped member 202 that restricts movement of the bearing in the axial direction is provided at the second end portion 402 (the other end side) of the bearing 40.

In this way, in the motor 50, since the one end portion 121 of the rotor shaft 12 is supported by the bearing 40 provided in the portion entering the inside of the core support portion 13, a width of the motor 50 itself in the axial direction can be made smaller than a width of the motor 50 of other embodiments. As a result, the motor 50 can be made compact. Furthermore, since the bearing 40 is fixed to abut against the connection portion 14, it is possible to prevent the grease from scattering.

Although the embodiments of the present disclosure have been described above, the embodiments merely exemplify some of application examples of the present disclosure and do not intend to limit the technical scope of the present disclosure to the specific configurations of the above embodiments. Various changes and modifications can be made to the above embodiments within the scope of the matters described in the claims.

Further, the technical ideas described in the embodiments may be appropriately combined within a range in which no technical contradiction occurs.

The rotor core 11, the stator 20, the core support portion 13, and the like described in the above embodiments are cylindrical members, and may also be polygonal tubular members.

Moreover, in the embodiments described above, the motor 50 is assembled to the transmission 60 that is a power transmission device, and the motor 50 may also be assembled to power transmission devices such as a decelerator. Also in this case, the rotor shaft 12 of the motor 50 and a rotation shaft of the decelerator can be coupled by applying the technical idea in the embodiments.

## Claims

1. A rotating electric machine (100) including a rotor (10) and a stator (20) in a housing (30), the rotor (10) having a rotor shaft (12) connected to a power transmission shaft (61) of a power transmission device (60), wherein
a bearing (40) is provided in the housing (30),
one end portion (121) of the rotor shaft (12) is supported by the bearing (40), and
the other end portion (122) of the rotor shaft (12) is supported by the power transmission shaft (61) with a spigot joint structure fitted to the power transmission shaft (61), a diameter of the one end portion (121) of the rotor shaft (12) on which the bearing (40) is supported is decreased by a step portion (124),
**characterized in that**
an elastic member (203a, 203b) is provided between the inner race (41) of the bearing (40) and the one end portion (121) of the rotor shaft (12), and the outer race (42) of the bearing (40) is fixed to the housing (30) by press-fitting,
a spring member (201) is installed between the bearing (40) and the step portion (124), and
a wall-shaped member (202) is fixed to the one end portion (121) on an opposite side of the bearing (40) to the spring member (201) such that the bearing (40) is biased by the spring member (201) toward the wall-shaped member (202).

2. The rotating electric machine (100) according to claim 1, wherein
the elastic member is an O-ring (203a, 203b) fixed to the rotor shaft (12).

3. The rotating electric machine (100) according to claim 2, wherein
two O-rings (203a, 203b) are provided in parallel in an axial direction between the bearing (40) and the rotor shaft (12).

4. The rotating electric machine (100) according to any one of claims 1 to 3, wherein
a gap formed between the bearing (40) and the rotor shaft (12) by the elastic member is filled with a viscous fluid.

5. The rotating electric machine (100) according to any one of claims 1 to 4, wherein
the bearing (40) is a double row angular contact ball bearing.

6. The rotating electric machine (100) according to any one of claims 1 to 5, wherein
the rotor (10) includes a connection portion (14) that is a plate-shaped member projecting in a radial direction of the rotor shaft (12) from an outer peripheral surface of the rotor shaft (12), the connection portion (14) couples the outer peripheral surface of the rotor shaft (12) to an inner peripheral surface of a rotor core (11).

## Patentansprüche

1. Rotierende elektrische Maschine (100) mit einem Rotor (10) und einem Stator (20) in einem Gehäuse (30), wobei der Rotor (10) eine Rotorwelle (12) aufweist, die mit einer Kraftübertragungswelle (61) einer Kraftübertragungsvorrichtung (60) verbunden ist, wobei
ein Lager (40) in dem Gehäuse (30) vorgesehen ist,
ein Endabschnitt (121) der Rotorwelle (12) von dem Lager (40) getragen wird, und
der andere Endabschnitt (122) der Rotorwelle (12) von der Kraftübertragungswelle (61) mit einer Zapfenverbindungsstruktur getragen wird, die an der Kraftübertragungswelle (61) angebracht ist, wobei ein Durchmesser des einen Endabschnitts (121) der Rotorwelle (12), an dem das Lager (40) getragen wird, durch einen Stufenabschnitt (124) verringert wird,
**dadurch gekennzeichnet, dass**
ein elastisches Element (203a, 203b) zwischen dem inneren Laufring (41) des Lagers (40) und dem einen Endabschnitt (121) der Rotorwelle (12) vorgesehen ist, und der äußere Laufring (42) des Lagers (40) durch Presspassung an dem Gehäuse (30) befestigt ist,
ein Federelement (201) zwischen dem Lager (40) und dem Stufenabschnitt (124) installiert ist, und
ein wandförmiges Element (202) an dem einen Endabschnitt (121) auf einer dem Federelement (201) gegenüberliegenden Seite des Lagers (40) derart befestigt ist, dass das Lager (40) durch das Federelement (201) in Richtung des wandförmigen Elements (202) vorgespannt ist.

2. Rotierende elektrische Maschine (100) nach Anspruch 1, wobei
das elastische Element ein O-Ring (203a, 203b) ist, der an der Rotorwelle (12) befestigt ist.

3. Rotierende elektrische Maschine (100) nach Anspruch 2, wobei
zwei O-Ringe (203a, 203b) parallel in einer axialen Richtung zwischen dem Lager (40) und der Rotorwelle (12) vorgesehen sind.

4. Rotierende elektrische Maschine (100) nach einem der Ansprüche 1 bis 3, wobei
ein Spalt, der zwischen dem Lager (40) und der Rotorwelle (12) durch das elastische Element gebildet ist, mit einem viskosen Fluid gefüllt ist.

5. Rotierende elektrische Maschine (100) nach einem der Ansprüche 1 bis 4, wobei
das Lager (40) ein zweireihiges Schrägkugellager ist.

6. Rotierende elektrische Maschine (100) nach einem der Ansprüche 1 bis 5, wobei
der Rotor (10) einen Verbindungsabschnitt (14) aufweist, der ein plattenförmiges Element ist, das in einer radialen Richtung der Rotorwelle (12) von einer Außenumfangsfläche der Rotorwelle (12) vorsteht, wobei der Verbindungsabschnitt (14) die Außenumfangsfläche der Rotorwelle (12) mit einer Innenumfangsfläche eines Rotorkerns (11) koppelt.

## Revendications

1. Machine électrique rotative (100) comprenant un rotor (10) et un stator (20) dans un boîtier (30), le rotor (10) ayant un arbre de rotor (12) relié à un arbre de transmission de puissance (61) d'un dispositif de transmission de puissance (60), dans laquelle
un palier (40) est prévu dans le boîtier (30),
une partie d'extrémité (121) de l'arbre de rotor (12) est supportée par le palier (40), et
l'autre partie d'extrémité (122) de l'arbre de rotor (12) est supportée par l'arbre de transmission de puissance (61) avec une structure de joint mâle ajustée sur l'arbre de transmission de puissance (61), un diamètre de la partie d'extrémité (121) de l'arbre de rotor (12) sur laquelle le palier (40) est supporté est diminué par une partie étagée (124),
**caractérisée en ce que**
un élément élastique (203a, 203b) est prévu entre la bague intérieure (41) du palier (40) et la partie d'extrémité (121) de l'arbre de rotor (12), et la bague extérieure (42) du palier (40) est fixée au boîtier (30) par ajustement serré,
un élément de ressort (201) est installé entre le palier (40) et la partie étagée (124), et
un élément en forme de paroi (202) est fixé à la partie d'extrémité (121) sur un côté opposé du palier (40) à l'élément de ressort (201) de sorte que le palier (40) est sollicité par l'élément de ressort (201) vers l'élément en forme de paroi (202).

2. Machine électrique rotative (100) selon la revendication 1, dans laquelle
l'élément élastique est un joint torique (203a, 203b) fixé à l'arbre de rotor (12).

3. Machine électrique rotative (100) selon la revendication 2, dans laquelle
deux joints toriques (203a, 203b) sont prévus en parallèle dans une direction axiale entre le palier (40) et l'arbre de rotor (12).

4. Machine électrique rotative (100) selon l'une quelconque des revendications 1 à 3, dans laquelle
un espace formé entre le palier (40) et l'arbre de rotor (12) par l'élément élastique est rempli d'un fluide visqueux.

5. Machine électrique rotative (100) selon l'une quelconque des revendications 1 à 4, dans laquelle
le palier (40) est un roulement à billes à contact angulaire à double rangée.

6. Machine électrique rotative (100) selon l'une quelconque des revendications 1 à 5, dans laquelle
le rotor (10) comprend une partie de connexion (14) qui est un élément en forme de plaque faisant saillie dans une direction radiale de l'arbre de rotor (12) à partir d'une surface périphérique externe de l'arbre de rotor (12), la partie de connexion (14) couple la surface périphérique externe de l'arbre de rotor (12) à une surface périphérique interne d'un noyau de rotor (11).
